# EUROPEAN PATENT APPLICATION

(11) **EP 4 571 536 A1**
(43) Date of publication of application: **18.06.2025**
(21) Application number: 24744343.5
(22) Date of filing: 18.01.2024
(51) Int. Cl.: G06F 16/955

(54) **QUICK-APPLICATION RUNNING METHOD, AND ELECTRONIC DEVICE**

(30) Priority: 20.01.2023 CN 202310091025
(71) Applicant: Huawei Technologies Co., Ltd., Shenzhen, Guangdong 518129 (CN)
(72) Inventor: ZOU, Chunchun, Shenzhen, Guangdong 518129 (CN)
(74) Representative: Maiwald GmbH
(86) International application number: PCT/CN2024/072960
(87) International publication number: WO 2024/153170

(57) **Abstract**

A quick application running method and an electronic device are provided. The electronic device receives a first operation, where the first operation is used to tap a first link, and the first link is related to a first quick application (S901). When a quick application engine is not installed on the electronic device, the electronic device obtains a uniform resource locator URL of a first web quick application, where the first web quick application is associated with the first quick application (S902). The electronic device obtains a first resource package of the first web quick application based on the URL, where the first resource package includes a resource file required for rendering a web page in the first web quick application (S903). The electronic device renders a first web page in the first web quick application based on the first resource package, and the electronic device displays the first web page (S904). In this way, when the quick application engine is not installed on the electronic device, the electronic device can run a quick application of a web page version.

## Description

This application claims priority to Chinese Patent Application No. 202310091025.6, filed with the China National Intellectual Property Administration on January 20, 2023 and entitled "QUICK APPLICATION RUNNING METHOD AND ELECTRONIC DEVICE", which is incorporated herein by reference in its entirety.

### TECHNICAL FIELD

This application relates to the field of electronic device technologies, and in particular, to a quick application running method and an electronic device.

### BACKGROUND

A quick application is an application, in a new installation-free application form, that does not need to be installed in advance and is downloaded immediately when a user uses the application. The quick application runs on an electronic device and relies on a quick application engine. Only an electronic device on which the quick application engine is installed can run the quick application. An electronic device on which the quick application engine is not installed cannot run the quick application.

### SUMMARY

This application provides a quick application running method and an electronic device, so that an electronic device on which a quick application engine is not installed can run a quick application of a web page version.

According to a first aspect, this application provides a quick application running method. The method includes: An electronic device receives a first operation, where the first operation is used to tap a first link, and the first link is related to a first quick application. When a quick application engine is not installed on the electronic device, the electronic device obtains a uniform resource locator URL of a first web quick application, where the first web quick application is associated with the first quick application. The electronic device obtains a first resource package of the first web quick application based on the URL, where the first resource package includes a resource file required for rendering a web page in the first web quick application. The electronic device renders a first web page in the first web quick application based on the first resource package, and the electronic device displays the first web page.

That the first web quick application is associated with the first quick application may mean that the first web quick application and the first quick application may provide a same or similar function.

Optionally, for different types of electronic devices, a same web quick application is generally developed by a same vendor, and a same web quick application may be used to implement a same or similar function on devices of different device types. Resource packages of a same web quick application downloaded by devices of different device types may be the same or different. For different types of devices, sizes of resource packages of a same web quick application may also be the same or different.

According to the method, when the quick application engine is not installed on the electronic device, the electronic device can run a quick application of a web page version.

With reference to the first aspect, in a possible implementation, that the electronic device displays the first web page specifically includes: The electronic device obtains a first web quick application engine, where the first web quick application engine is used to provide a basic capability of running a web quick application by the electronic device; and the electronic device runs the first quick application based on the first web quick application engine and displays the first web page. In this way, when the quick application engine is not installed on the electronic device, the electronic device may run the web quick application based on the web quick application engine, to implement a function the same as or similar to that of the quick application.

With reference to the first aspect, in a possible implementation, that the electronic device obtains a first web quick application engine specifically includes: When the first web quick application engine is installed on the electronic device, the electronic device directly obtains the first web quick application engine locally. In this way, when the web quick application engine is installed on the electronic device, the electronic device may use the installed web quick application engine.

With reference to the first aspect, in a possible implementation, the first resource package includes a first version number of a second web quick application engine and a download address of the second web quick application engine. That the electronic device directly obtains the first web quick application engine locally specifically includes: The electronic device locally obtains a second version number of the first web quick application engine. When the second version number is the same as the first version number, the electronic device directly obtains the first web quick application engine locally.

The first version number of the second web quick application engine is a version number of the first resource package stored in a web quick application server, and the version number is a version number of a latest version.

The download address of the second web quick application engine may be a storage location of a web quick application engine of the latest version in the web quick application server. Optionally, the web quick application engine may not be stored in the web quick application server, but is stored in another server. In this case, the download address of the second web quick application engine may be a storage location of the web quick application engine of the latest version in the another server.

In this way, when running the web quick application, the electronic device may depend on a web quick application engine of a later version. Therefore, the electronic device needs to determine whether the locally installed web quick application engine is the web quick application engine of the latest version. Optionally, whether the locally installed web quick application engine is the web quick application engine of the latest version may be determined based on the version number. When the locally stored web quick application engine is the web quick application engine of the latest version, the electronic device may directly run the web quick application based on the local web quick application engine.

With reference to the first aspect, in a possible implementation, when the second version number is different from the first version number, the electronic device obtains the second web quick application engine based on the download address of the second web quick application engine. That the electronic device runs the first quick application based on the first web quick application engine and displays the first web page specifically includes: The electronic device runs the first quick application based on the second web quick application engine and displays the first web page. In this way, when the locally stored web quick application engine is the web quick application engine of the latest version, the electronic device needs to download the web quick application engine of the latest version, and run the web quick application based on the web quick application engine of the latest version.

Optionally, after the electronic device obtains the web quick application engine of the latest version, the electronic device may delete a web quick application engine of an earlier version, to release storage space of the electronic device.

Optionally, compared with the web quick application engine of the earlier version, in a web quick application engine of a later version, a basic capability may be newly added. In this case, the electronic device may not obtain a complete web quick application engine, but obtain only a resource package of a web quick application engine of the newly added basic capability.

With reference to the first aspect, in a possible implementation, the method further includes: When the first web quick application engine is not installed on the electronic device, the electronic device obtains the download address of the second web quick application engine from the first resource package. The electronic device obtains the second web quick application engine based on the download address of the second web quick application engine. That the electronic device runs the first quick application based on the first web quick application engine and displays the first web page specifically includes: The electronic device runs the first quick application based on the second web quick application engine and displays the first web page. In this way, when the web quick application engine is not installed on the electronic device, the electronic device may directly download the web quick application engine of the latest version.

With reference to the first aspect, in a possible implementation, the URL of the first web quick application is generated by a web quick application server based on a domain name of the first web quick application. The domain name of the first web quick application is generated by a domain name management server, and the domain name management server stores a correspondence between a storage location of a first resource package in the web quick application server and the domain name of the first web quick application.

Specifically, before the URL of the web quick application is generated, whether the first web quick application has a domain name needs to be first determined. When the first web quick application does not have a domain name, the domain name management server needs to be requested to generate the domain name of the first web quick application. The request carries a storage location, namely, an IP address, of the first resource package of the first web quick application in the web quick application server. After receiving the request, the domain name management server may generate the domain name of the first web quick application, and establish a correspondence between the domain name of the first web quick application and the IP address of the first resource package of the first web quick application. Then, the domain name management server sends the domain name of the first web quick application to the web quick application server. After receiving the domain name of the first web quick application, the web quick application server may generate the URL of the first web quick application based on the domain name of the first web quick application.

With reference to the first aspect, in a possible implementation, different web quick applications have different domain names. In this way, information leakage between different web quick applications can be avoided.

With reference to the first aspect, in a possible implementation, that the electronic device renders a first web page in the first web quick application based on the first resource package specifically includes: The electronic device renders the first web page in the first web quick application based on the first resource package and a web component provided by a first browser.

Optionally, the first web page is not limited to being rendered in the first browser. When another application can provide a web component, the electronic device may directly render the first web page based on the web component provided by the another application.

With reference to the first aspect, in a possible implementation, the first resource package is obtained based on an installation package of the first quick application and a web quick application template. The web quick application template includes but is not limited to one or more of the following: a web quick application resource file, a hypertext markup language (hypertext markup language, HTML) file, and a configuration file. The configuration file includes but is not limited to one or more of the following: a download address of a web quick application engine and description information of the first web quick application.

With reference to the first aspect, in a possible implementation, the basic capability of running the web quick application by the electronic device includes one or more of the following: an interface interaction capability, a network access capability, a file data storage capability, an audio/video playing capability, an image display capability, and a security capability.

With reference to the first aspect, in a possible implementation, when the quick application engine is installed on the electronic device, the electronic device runs the first quick application based on the quick application engine, and displays a first user interface of the first quick application.

According to a second aspect, this application provides an electronic device, including a processor and a memory. The memory is coupled to the processor, the memory is configured to store computer program code, the computer program code includes computer instructions, and the processor invokes the computer instructions to enable the electronic device to perform the quick application running method provided in any one of the possible implementations of the first aspect.

According to a third aspect, this application provides a computer-readable storage medium, configured to store computer instructions. When the computer instructions are run on an electronic device, the electronic device is enabled to perform the quick application running method provided in any one of the possible implementations of the first aspect.

According to a fourth aspect, this application provides a computer program product. When the computer program product runs on an electronic device, the electronic device is enabled to perform the quick application running method provided in any one of the possible implementations of the first aspect.

For descriptions of beneficial effects in the second aspect to the fourth aspect, refer to the descriptions of the beneficial effects in the first aspect. Details are not described herein again in this application.

### BRIEF DESCRIPTION OF DRAWINGS

FIG. 1 is a diagram of running a quick application on an electronic device according to an embodiment of this application;
FIG. 2A to FIG. 2C are diagrams of running a quick application on an electronic device 100;
FIG. 2D is a diagram of a system architecture according to an embodiment of this application;
FIG. 3 is a diagram of a structure of an electronic device 100 according to an embodiment of this application;
FIG. 4 is a block diagram of a software architecture of an electronic device 100 according to an embodiment of this application;
FIG. 5 is a schematic flowchart of generating a web quick application and a quick application according to an embodiment of this application;
FIG. 6A is a flowchart of generating a URL of a web quick application according to an embodiment of this application;
FIG. 6B is another flowchart of generating a URL of a web quick application according to an embodiment of this application;
FIG. 7A and FIG. 7B are a schematic flowchart of a method for running a quick application by an electronic device 100 according to an embodiment of this application;
FIG. 8A to FIG. 8F are examples of diagrams of UIs of running a first web quick application by an electronic device 100; and
FIG. 9 is a schematic flowchart of a quick application running method according to an embodiment of this application.

### DESCRIPTION OF EMBODIMENTS

The technical solutions according to embodiments of this application are clearly described in the following with reference to the accompanying drawings. In descriptions of embodiments of this application, unless otherwise specified, "/" represents "or". For example, A/B may represent A or B. In this specification, "and/or" describes only an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

Some concepts related to this application are first described in detail.

A user interface (user interface, UI) in embodiments of this application is a medium interface for interaction and information exchange between an application or an operating system and a user, and implements conversion between an internal form of information and a form acceptable to the user. A user interface of an application is source code written in a specific computer language like Java or an extensible markup language (extensible markup language, XML). Interface source code is parsed and rendered on an electronic device, and is finally presented as content that can be identified by the user, for example, a control like a picture, a text, or a button. A control (control) is a basic element of a user interface. Typical controls include a button (button), a widget (widget), a toolbar (toolbar), a menu bar (menu bar), a text box (text box), a scrollbar (scrollbar), an image, and a text. An attribute and content of the control in the interface are defined by using a tag or a node. For example, the control included in the interface is defined in the XML by using a node such as <Textview>, <ImgView>, or <VideoView>. One node corresponds to one control or attribute in the interface. After being parsed and rendered, the node is displayed as user-visible content. In addition, interfaces of many applications such as a hybrid application (hybrid application) usually include a web page. A web page, also referred to as a page, may be understood as a special control embedded in an application interface. The web page is source code written in a specific computer language, for example, a hypertext markup language (hypertext markup language, HTML), a cascading style sheet (cascading style sheets, CSS), or JavaScript (JavaScript, JS). The web page source code may be loaded and displayed as user-recognizable content by a browser or a web page display component having a function similar to that of the browser. Specific content included in the web page is also defined by a tag or a node in the web page source code. For example, an element and an attribute of a web page are defined in the HTML by <p>, <img>, <video>, and <canvas>. A frequently-used representation form of the user interface is a graphical user interface (graphical user interface, GUI), and is a user interface that is displayed in a graphical manner and that is related to a computer operation. The user interface may be an interface element like a window or a control displayed on a display of the electronic device.

An integrated development environment (integrated development environment, IDE) is application software that assists program developers in developing software and can assist in writing source code text inside a development tool, compiling the text, and packaging the text into an available program. Some can also design graphical interfaces. An IDE usually includes a programming language editor, an automatic build tool, a debugger, and the like. Some IDEs include compilers/interpreters, and others do not. These IDEs can compile codes by invoking third-party compilers. Optionally, the IDE also includes a version control system and some tools for designing a graphical user interface. Many object-oriented modem IDEs also include category browsers, object viewers, object structure diagrams, and the like. In embodiments of this application, a quick application is usually developed in a specific IDE, for example, this IDE may be an IDE of a Huawei quick application.

An engine (engine) is a core component of a development program or system on an electronic platform. A developer may use the engine to quickly establish and layout a function required by a program, or use the engine to assist running of the program. Generally, an engine is a support part of a program or a system. Common program engines include game engines, search engines, and antivirus engines. In embodiments of this application, a quick application needs to be interpreted and executed by using a dedicated engine.

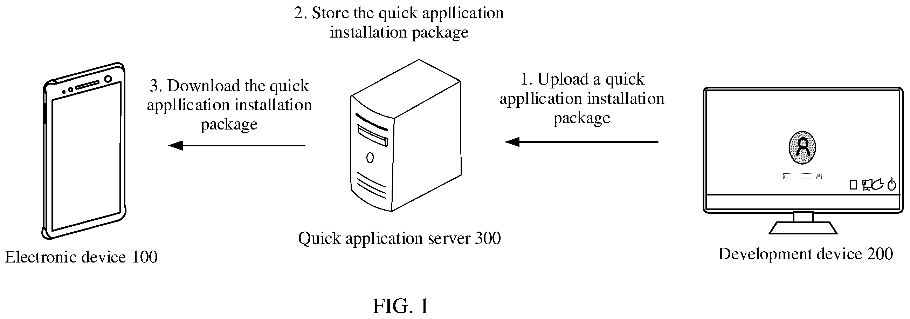

FIG. 1 is a diagram of running a quick application on an electronic device according to an embodiment of this application.

A development device 200 may be an electronic device configured with an IDE, for example, a notebook computer or a desktop computer. In FIG. 1, a desktop computer is used as an example. A program developer may write source code of a quick application by using the development device 200. After the source code of the quick application has been written, the development device 200 may generate an installation package of the quick application based on the source code, and upload the installation package of the quick application to a quick application server 300.

Optionally, for different types of electronic devices, a same quick application is generally developed by a same vendor, and a same quick application may be used to implement a same or similar function on devices of different device types. Installation files or package names of installation packages of a same quick application downloaded by devices of different device types may be the same or different. For different types of devices, sizes of installation packages of a same quick application may also be the same or different.

The quick application server 300 stores a plurality of different quick applications, and the different quick applications may implement different functional characteristics.

The electronic device 100 may download the installation package of the quick application from the quick application server 300 and use the quick application. A quick application engine needs to be configured for the electronic device 100, so that the electronic device 100 can parse, by using the quick application engine, the installation package of the quick application to obtain a file required for running the quick application. After the file required for running the quick application is obtained through parsing, a user may use, by using the electronic device 100, the functional characteristics provided by the quick application.

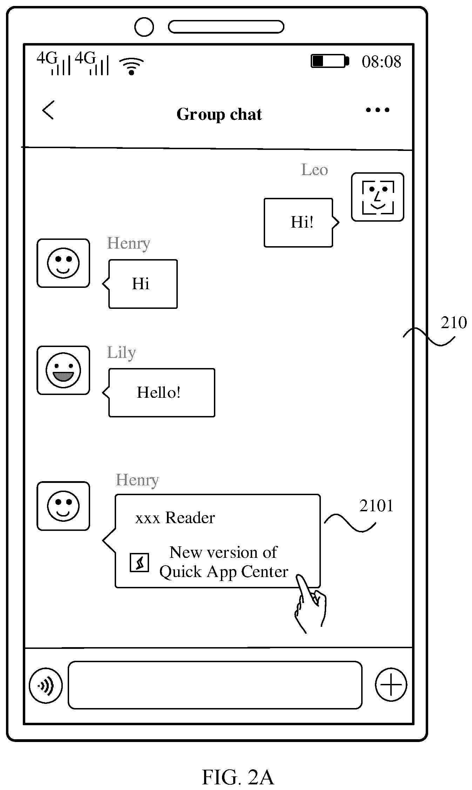

FIG. 2A to FIG. 2C are diagrams of running a quick application on an electronic device 100.

FIG. 2A shows an instant messaging page 210 on an electronic device 100. The instant messaging page 210 shows chat content of a plurality of users. The electronic device 100 receives a quick application link 2101 shared by a user "Henry". A name of the quick application may be "xxx Reader".

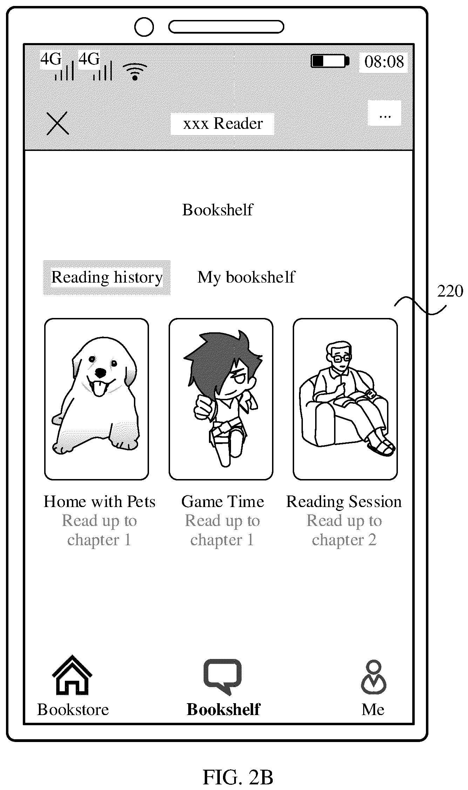

As shown in FIG. 2A, the electronic device 100 may receive an input operation (for example, a tap) performed by the user on the quick application link 2101. In response to the input operation performed by the user, when a quick application engine is configured for the electronic device 100, the electronic device 100 may directly run "xxx Reader" based on an installation package of "xxx Reader". For example, the electronic device 100 may display a user interface 220 shown in FIG. 2B.

The user interface 220 shows a user interface in the quick application "xxx Reader". The user interface 220 includes a reading history. For example, the user has read an e-book "Home with Pets", an e-book "Game Time", and an e-book "Reading Session". The e-book "Home with Pets" has been read up to chapter 1. The e-book "Game Time" has been read up to chapter 1. The e-book "Reading Session" has been read up to chapter 2. The electronic device 100 may receive a user operation, and query an e-book in the quick application "xxx Reader" and read the e-book.

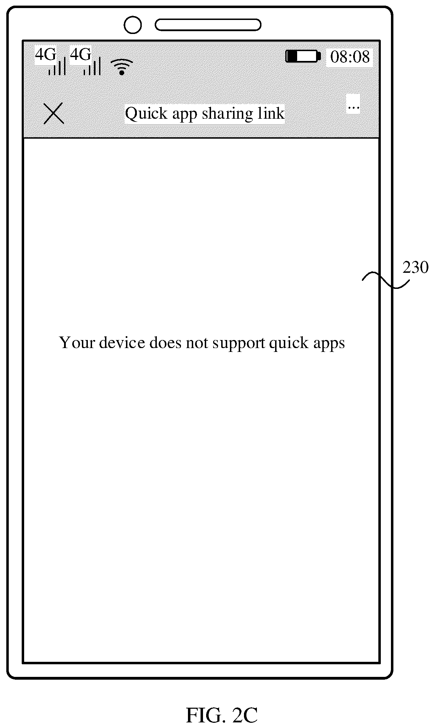

When the quick application engine is not configured for the electronic device 100, the electronic device 100 cannot run "xxx Reader". For example, the electronic device 100 may display a user interface 230 shown in FIG. 2C. The user interface 230 shows prompt information "Your device does not support quick apps". In this way, the user is prompted that the electronic device 100 cannot run the quick application.

Running a quick application on the electronic device 100 has the following disadvantages.

The quick application engine needs to be configured for the electronic device 100. If the quick application engine is not configured for the electronic device 100, the electronic device 100 cannot run the quick application.

Some quick applications can run on the electronic device 100 only when a quick application engine of a later version is used. If a quick application engine of an earlier version on the electronic device 100 is not updated in time, even if there is a quick application engine on the electronic device 100, the electronic device 100 cannot run the quick application.

Based on this, this application provides a quick application running method. The method may include the following steps.

The electronic device 100 receives a first operation, where the first operation is an operation of running a first quick application.

When a quick application engine is configured for the electronic device 100, and the electronic device 100 stores an installation package of a first quick application, the electronic device 100 may directly parse the installation package of the first quick application based on the quick application engine, and display a first user interface of the first quick application. When the electronic device 100 does not store the installation package of the first quick application, the electronic device 100 may download the installation package of the first quick application from a first server, and then the electronic device 100 parses the installation package of the first quick application based on the quick application engine, and displays the first user interface of the first quick application.

When the quick application engine is not configured for the electronic device 100, the electronic device 100 may obtain, from a second server, a first resource package of a first web quick application corresponding to the first quick application and a web quick application engine. The first web quick application engine is used to provide a basic capability of the web quick application, and the first resource package is used to provide a resource file for the electronic device 100 to draw and render a web page in the first web quick application.

The first resource package of the first web quick application may be obtained based on the installation package of the first quick application and a web quick application template. The web quick application template includes but is not limited to a web quick application resource file, a hypertext markup language (hypertext markup language, HTML) file, and a configuration file. The HTML file is a static web page file, and is used by the electronic device 100 to draw and render a web page based on the first resource package. The configuration file may include but is not limited to a download address of the web quick application engine and description information of the first web quick application. After the electronic device 100 obtains the first resource package, the electronic device 100 may obtain the web quick application engine based on the download address of the web quick application engine in the configuration file in the first resource package.

The web quick application engine may provide the basic capability of the web quick application. The basic capability includes but is not limited to one or more of the following: an interface interaction capability, a network access capability, a file data storage capability, an audio/video playing capability, an image display capability, and a security capability. In some embodiments, the web quick application engine may also be referred to as an application program interface (application program interface, API) for implementing the basic capability of the web quick application.

Optionally, the electronic device 100 may render a first web page of the first web quick application by using a web component provided by a first browser.

A function of the first web quick application is the same as or similar to a function of the first quick application.

In this way, when the quick application engine is not configured for the electronic device 100, the electronic device 100 may run a first quick application of a web page version, namely, the first web quick application. This resolves a problem that the electronic device 100 cannot run a quick application because the quick application engine is not configured for the electronic device 100.

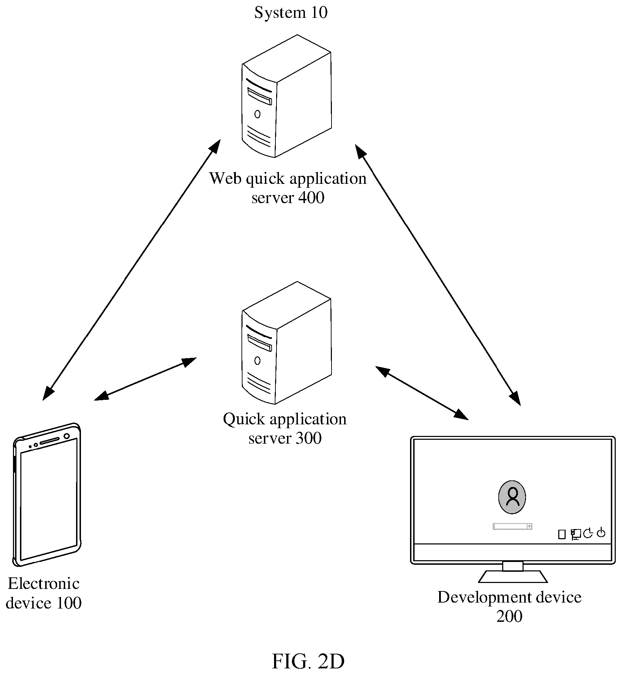

The following describes a system provided in embodiments of this application. FIG. 2D is a diagram of a system according to an embodiment of this application. The system 10 may include an electronic device 100, a development device 200, a quick application server 300, and a web quick application server 400.

A development device 200 may be an electronic device configured with an IDE, for example, a notebook computer or a desktop computer. In FIG. 1, a desktop computer is used as an example. A program developer may write source code of a quick application by using the development device 200. After the source code of the quick application has been written, the development device 200 may generate an installation package of the quick application based on the source code, and upload the installation package of the quick application to a quick application server 300.

The quick application server 300 may receive and store an installation package of a quick application that is uploaded by the development device 200, or may provide the electronic device with a service of downloading the installation package of the quick application. Specifically, the quick application server 300 may receive a download request sent by an electronic device for which a quick application engine is configured, where the download request includes an identifier of the quick application. The quick application server 300 sends, based on the identifier of the quick application, the installation package of the quick application to the electronic device for which the quick application engine is configured. The electronic device for which the quick application engine is configured may download the installation package of the quick application from the quick application server 300 and run the quick application.

The development device 200 may alternatively obtain a resource package of a web quick application based on the installation package of the quick application and a web quick application template. Then, the development device 200 releases and stores the resource package of the web quick application in the web quick application server 400. An electronic device for which the quick application engine is not configured may download the resource package of the web quick application from the web quick application server 400 and run the web quick application.

The web quick application server 400 may receive and store the resource package that is of the web quick application and that is uploaded by the development device 200, or may provide the electronic device with a service of downloading the resource package of the web quick application. Specifically, the web quick application server 400 may receive a download request sent by the electronic device for which the quick application engine is not configured. In response to the download request, the web quick application server 400 may obtain the resource package of the web quick application, and send the resource package of the web quick application to the electronic device for which the quick application engine is not configured. Then, the electronic device 100 may further obtain a web quick application engine based on a download address of the web quick application engine in a configuration file in the resource package of the web quick application. In this way, the electronic device for which the quick application engine is not configured can obtain the resource package of the web quick application and the web quick application engine.

In some embodiments, the web quick application server 400 may also be referred to as a web quick application website. The web quick application website includes a plurality of different web quick application web pages.

Optionally, the web quick application engine may be stored in the web quick application server 400, or may be stored in another server. This is not limited in this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application. In embodiments of this application, an example in which the electronic device 100 is a mobile phone is used for description.

When a quick application engine is configured for the electronic device 100, the electronic device 100 may obtain the installation package of the quick application from the quick application server 300, and run the quick application based on the installation package of the quick application by using the quick application engine.

When the quick application engine is not configured for the electronic device 100, the electronic device 100 may obtain the resource package of the web quick application from the web quick application server 400. Then, the electronic device 100 may obtain the web quick application engine based on the download address of the web quick application engine in the configuration file in the resource package of the web quick application. The electronic device 100 may draw and render a web page of a first web quick application based on the web quick application engine and the resource package of the web quick application, and display the web page of the first web quick application. In this way, when the quick application engine is not configured for the electronic device 100, the electronic device 100 can start the web quick application by using the web page.

The following describes an electronic device in the embodiments of this application.

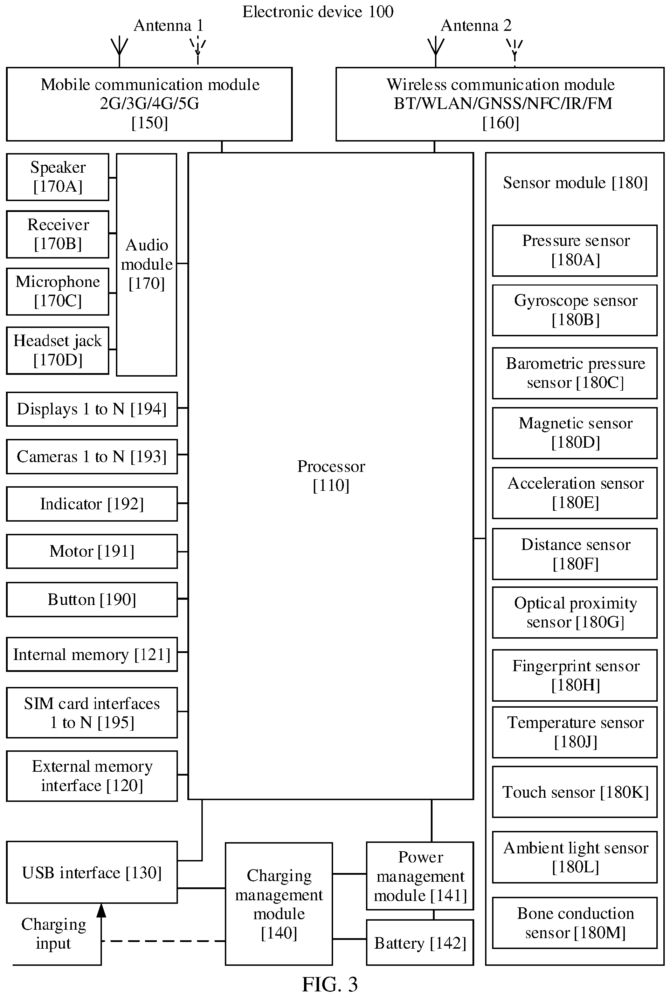

FIG. 3 is a diagram of a structure of the electronic device 100.

The electronic device 100 is used as an example below to describe embodiments in detail. It should be understood that the electronic device 100 shown in FIG. 3 is merely an example, and the electronic device 100 may have more or fewer components than those shown in FIG. 3, may combine two or more components, or may have different component configurations. The various components shown in the figure may be implemented in hardware including one or more signal processing circuits and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. When the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to connect to a headset for playing an audio through the headset. The interface may be further configured to connect to another electronic device such as an AR device.

It may be understood that an interface connection relationship between the modules that is shown in this embodiment of the present disclosure is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another function module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a microLED, a micro-OLED, a quantum dot light-emitting diode (quantum dot light-emitting diode, QLED), and the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

The following describes a software system architecture of an electronic device provided in an embodiment of this application.

A software system of the electronic device 100 may use a layered architecture, an event-driven architecture, a microkernel architecture, a micro service architecture, or a cloud architecture. In this embodiment of the present invention, a layered architecture is used as an example to illustrate the software structure of the electronic device 100.

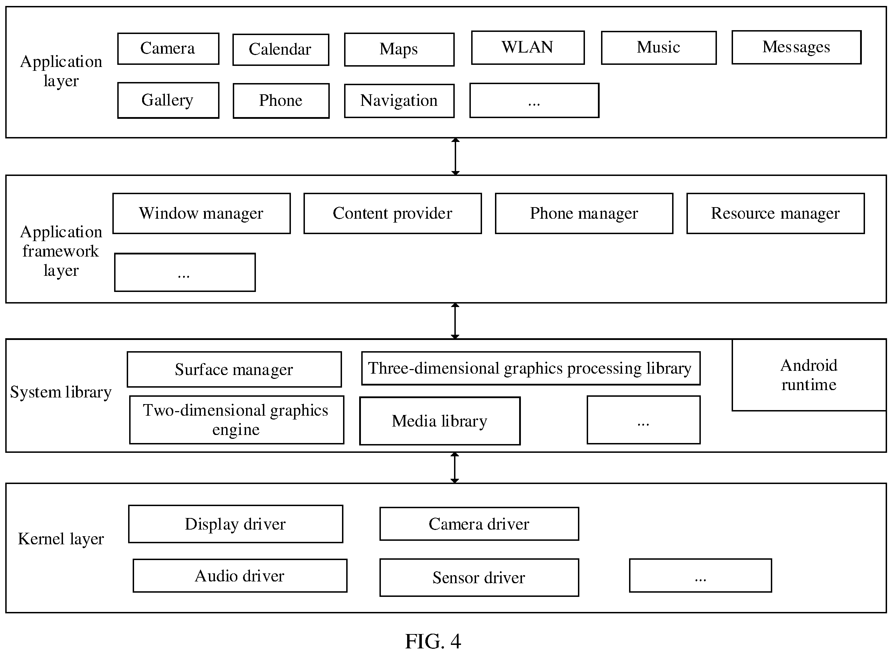

FIG. 4 is a block diagram of a software architecture of an electronic device 100 according to an embodiment of this application. In a layered architecture, software is divided into several layers, and each layer has a clear role and task. The layers communicate with each other through a software interface. In some embodiments, a system of the electronic device may be divided into an application layer, an application framework layer, a system layer, and a kernel layer.

The application layer may be configured to implement application management and an interface operation. The application layer may include a series of application packages, for example, a service center. A user searches for or uses an installation-free application on the electronic device by using the service center.

The application framework layer may include an application management module, an installation-free application pre-download decision, and an installation-free application download module. The application management module is configured to: install/uninstall an installation-free application on the device, and calculate use frequency of the installation-free application on the device. The installation-free application pre-download decision is used to collect statistics on the use frequency of installation-free application on the device. The installation-free application download module is configured to: determine whether the use frequency of the installation-free application is greater than preset frequency, and when the use frequency is greater than the preset frequency, indicate another device to pre-download the installation-free application.

The system layer may be configured to be responsible for connecting an operating system and the application layer, to provide a basic function of the system. The system layer may include a distributed database, a communication module, and a system layer application program interface.

The distributed database may provide a capability of managing the distributed database and a capability of synchronizing the distributed database between electronic devices.

The communication module may be configured to provide a cross-device communication capability, a cross-process communication capability, and a cross-device information transfer capability.

The kernel layer is an internal core program of the operating system, and may be configured to externally provide core management invoking of the electronic device. The kernel layer includes a display driver, a camera driver, an audio driver, a sensor driver, and the like. Code of the operating system may be divided into a plurality of parts. Address space in which a kernel is located may be referred to as kernel space.

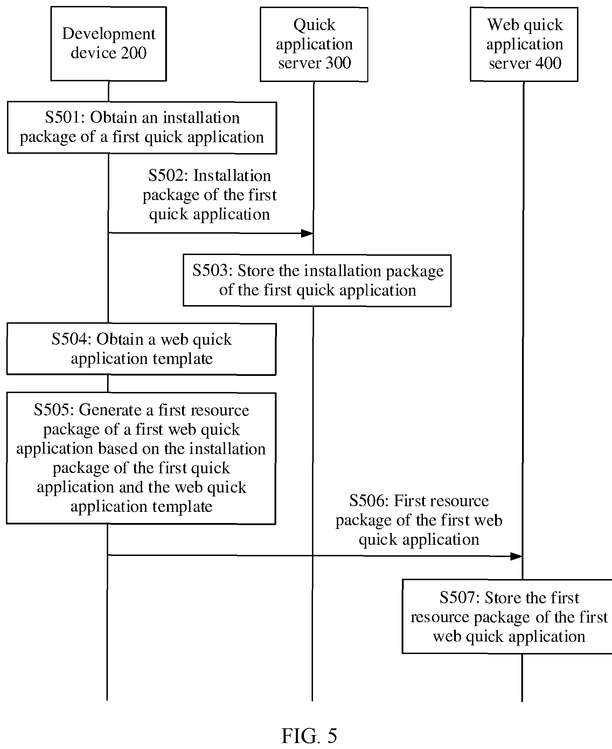

FIG. 5 is a schematic flowchart of generating a web quick application and a quick application according to an embodiment of this application.

S501 to S503 are method steps of generating an installation package of a first quick application.

S504 to S507 are method steps of generating an installation package of a first web quick application.

S501: A development device 200 obtains the installation package of the first quick application.

The installation package of the first quick application may be application program code written by a developer. The development device 200 may generate the installation package of the first quick application based on the application program code written by the developer.

S502: The development device 200 sends the installation package of the first quick application to a quick application server 300.

S503: The quick application server 300 stores the installation package of the first quick application.

After the development device 200 obtains the installation package of the first quick application, the development device 200 sends the installation package of the first quick application to the quick application server 300.

The quick application server 300 may store the installation package of the first quick application. The quick application server 300 stores installation packages of a plurality of different quick applications.

Optionally, for different types of devices, the first quick application is generally developed by a same vendor. The first quick application may be used to implement a same or similar function on devices of different device types. Installation files or package names of installation packages of the first quick application downloaded by devices of different device types may be the same or different. For different types of devices, sizes of installation packages of the first quick application may also be the same or different.

An electronic device for which a quick application engine is configured may download the installation package of the first quick application from the quick application server 300, and run the installation package of the first quick application, to implement a function of the first quick application.

S504: The development device 200 obtains a web quick application template.

S505: The development device 200 generates a first resource package of the first web quick application based on the installation package of the first quick application and the web quick application template.

The web quick application template includes but is not limited to a web quick application resource file, a hypertext markup language (hypertext markup language, HTML) file, a configuration file, and the like. The HTML file is a static web page file, and is used by the electronic device 100 to draw and render a web page based on the first resource package. The configuration file may include but is not limited to a download address of a web quick application engine, description information of the first web quick application, and the like.

The web quick application template may further include more other files. This is not limited in this application.

Optionally, web quick application templates used to generate resource packages of different web quick applications may be the same.

Optionally, for different types of devices, the first web quick application is generally developed by a same vendor. The first web quick application may be used to implement a same or similar function on devices of different device types. Resource packages of the first web quick application downloaded by devices of different device types may be the same or different. For different types of devices, sizes of resource packages of the first web quick application may also be the same or different.

S506: The development device 200 sends the first resource package of the first web quick application to a web quick application server 400.

S507: The web quick application server 400 stores the first resource package of the first web quick application.

After the development device 200 obtains the first resource package of the first web quick application, the development device 200 may send the first resource package of the first web quick application to the quick application server 300.

The quick application server 300 may store the first resource package of the first web quick application. The quick application server 300 stores resource packages of a plurality of different web quick applications.

When the electronic device 100 needs to use the first quick application, and a quick application engine is not configured for the electronic device 100, the electronic device 100 cannot use the first quick application. In this case, the electronic device 100 may download, from the web quick application server 400, the first resource package of the first web quick application corresponding to the first quick application, to implement a function of the first web quick application.

After storing the first resource package of the first web quick application, the web quick application server 400 may generate a uniform resource locator (uniform resource locator, URL) of the first resource package. The URL of the first resource package may be referred to as a storage path or a storage address of the first resource package on the web quick application server 400. The electronic device may obtain the first resource package from the web quick application server 400 based on the URL of the first resource package.

The following describes how to generate the URL of the first web quick application.

The web quick application server 400 has an IP address corresponding to the web quick application server 400, and the electronic device 100 may access the web quick application server 400 based on the IP address. Generally, an IP address is a long string of digits that are difficult to remember. To help remember the IP address of the web quick application server 400, a domain name of the web quick application server 400 may be applied for, to establish a correspondence between the IP address and the domain name of the web quick application server 400. For example, the web quick application server 400 may be "huawei.com".

The URL may be obtained by adding transmission protocol information before the domain name. The URL may also be referred to as a website address. For example, a URL of a home page of the web quick application server 400 may be "http://www.huawei.com".

In this way, the electronic device 100 can obtain the IP address of the web quick application server 400 by using the URL of the web quick application server 400, and then access the web quick application server 400. The web quick application server 400 stores resource packages of a plurality of different web quick applications. A storage location of the resource package of the web quick application in the web quick application server 400 may be referred to as a URL of the resource package of the web quick application.

Optionally, the web quick application and the web quick application server 400 may share a domain name. When the web quick application server 400 has the domain name, the URL of the resource package of the web quick application may be generated based on the domain name of the web quick application server 400. In this case, URLs of resource packages of different web quick applications are different. For example, the URL of the first web quick application may be "http://www.huawei.com/cnabcftibhaobong", and a URL of a second web quick application may be "http://www.huawei.com/cmpourhfkahhafg". The URL of the first web quick application is different from the URL of the second web quick application.

Preferably, different web quick applications use different domain names. The web quick application server 400 needs to apply for a domain name of each web quick application. In this way, different web quick applications use different domain names, to prevent information leakage between the web quick applications. Optionally, web quick applications belonging to a same vendor may share a domain name. This is not limited in this application.

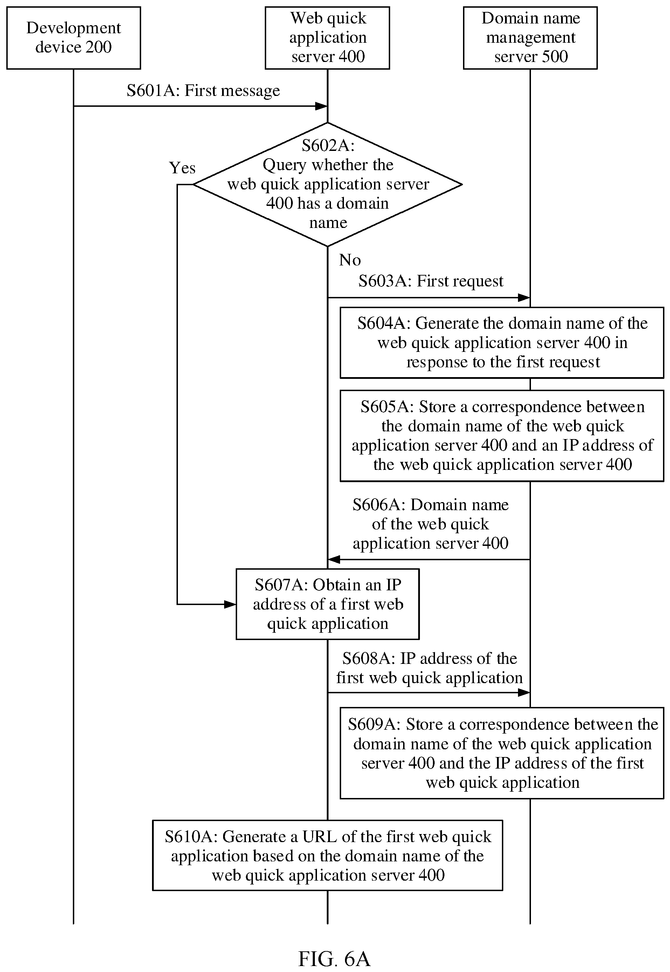

FIG. 6A is a flowchart of generating a URL of a web quick application.

FIG. 6A is a schematic flowchart of a method in which a web quick application and a web quick application server 400 share a same domain name.

S601A: A development device 200 sends a first message to the web quick application server 400.

The first message indicates the web quick application server 400 to query whether the web quick application server 400 has a domain name.

S602A: The web quick application server 400 needs to query whether the web quick application server 400 has a domain name.

When the web quick application server 400 has the domain name, S607A is performed.

When the web quick application server 400 does not have the domain name, S603A to S606A are performed.

S603A: The web quick application server 400 sends a first request to a domain name management server 500.

The first request may carry an IP address of the web quick application server 400.

Optionally, the development device 200 may alternatively separately send the first request and the IP address of the web quick application server 400 to the domain name management server 500. The IP address of the web quick application server 400 may not be sent to the domain name management server 500 together with the first request.

S604A: The domain name management server 500 generates the domain name of the web quick application server 400 in response to the first request.

When the web quick application server 400 does not have the domain name, the web quick application server 400 sends the first request to the domain name management server 500, where the first request indicates the domain name management server 500 to generate the domain name of the web quick application server 400.

In response to the first request, the domain name management server 500 may generate the domain name of the web quick application server 400.

In a possible implementation, in response to the first request, the domain name management server 500 may send a message to the development device 200 via the web quick application server 400, where the message is used to prompt a developer whether to generate the domain name of the web quick application server 400. With consent of the developer, the web quick application server 400 may send an indication message to the domain name management server 500, where the indication message indicates the domain name management server 500 to generate the domain name of the web quick application server 400. With disconsent of the developer, the domain name management server 500 does not need to generate the domain name of the web quick application server 400.

In another possible implementation, in response to the first request, the domain name management server 500 may first generate the domain name of the web quick application server 400. Then, the web quick application server 400 sends a message to the development device 200, where the message is used to prompt the developer whether to confirm to use the domain name of the web quick application server 400. With consent of the developer, the web quick application server 400 may send an indication message to the domain name management server 500, where the indication message indicates the domain name management server 500 to confirm to use the domain name of the web quick application server 400. With disconsent of the developer, the web quick application server 400 may alternatively send an indication message to the domain name management server 500, where the indication message indicates the domain name management server 500 to cancel the domain name of the web quick application server 400.

S605A: The domain name management server 500 stores a correspondence between the domain name of the web quick application server 400 and the IP address of the web quick application server 400.

After the domain name management server 500 generates the domain name of the web quick application server 400, the domain name management server 500 may store the correspondence between the domain name of the web quick application server 400 and the IP address of the web quick application server 400. In this way, the domain name management server 500 can obtain the IP address of the web quick application server 400 based on the domain name of the web quick application server 400, so that another device can access the web quick application server 400 based on the IP address of the web quick application server 400.

S606A: The domain name management server 500 sends the domain name of the web quick application server 400 to the web quick application server 400.

The domain name management server 500 sends the domain name of the web quick application server 400 to the web quick application server 400, so that the web quick application server 400 can generate the URL of the web quick application stored in the web quick application server 400.

Optionally, if the domain name management server 500 does not have a URL, the web quick application server 400 may generate a URL of the web quick application server 400.

S607A: The web quick application server 400 obtains an IP address of a first web quick application on the web quick application server 400.

A first resource package of the first web quick application may be stored in the web quick application server 400. In this case, the web quick application server 400 may obtain a storage location of the first resource package of the first web quick application on the web quick application server 400. The storage location of the first resource package of the first web quick application on the web quick application server 400 may also be referred to as an IP address of the first resource package of the first web quick application on the web quick application server 400.

Optionally, the IP address of the first web quick application may be an IP address of a resource file of a home page in the first web quick application on the web quick application server 400, or may be an IP address of a resource file of a non-home page in the first web quick application on the web quick application server 400, or may be IP addresses of resource files of all web pages in the first web quick application on the web quick application server 400. This is not limited in this application.

Optionally, the first web quick application may include a plurality of web pages. In this case, the first resource package may include resource files of the plurality of web pages. Storage locations of resource files of different web pages on the web quick application server 400 are different. In other words, IP addresses of resource files of different web pages on the web quick application server 400 are different.

S608A: The web quick application server 400 sends the IP address of the first web quick application to the domain name management server 500.

S609A: The domain name management server 500 stores a correspondence between the domain name of the web quick application server 400 and the IP address of the first web quick application.

When the web quick application server 400 and the first web quick application share a same domain name, before the first web quick application uses the domain name of the web quick application server 400, the domain name management server 500 needs to store the correspondence between the domain name of the web quick application server 400 and the IP address of the first web quick application.

S610A: The web quick application server 400 generates a URL of the first web quick application based on the domain name of the web quick application server 400.

After the domain name management server 500 stores the correspondence between the domain name of the web quick application server 400 and the IP address of the first web quick application, the first web quick application is allowed to use the domain name of the web quick application server 400. In this case, the web quick application server 400 generates the URL of the first web quick application based on the domain name of the web quick application server 400.

Herein, that the web quick application server 400 generates the URL of the first web quick application may be generating URLs of all the web pages in the first web quick application.

For example, a URL of a home page of the web quick application server 400 may be "http://www.huawei.com".

A URL of the home page in the first web quick application may be "http://www.huawei.com/cnabcftibhaobong".

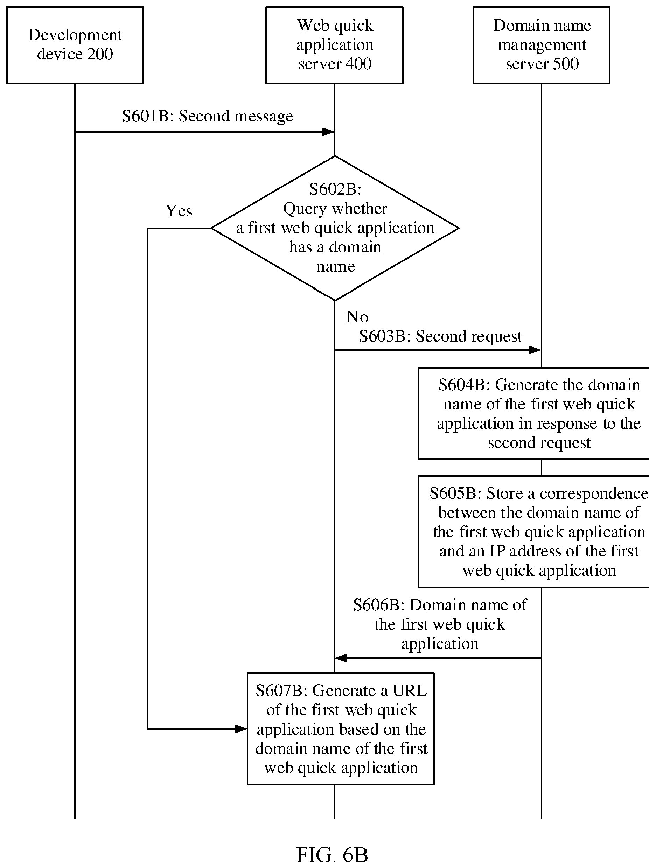

FIG. 6B is another flowchart of generating a URL of a web quick application.

FIG. 6B is a schematic flowchart of a method for using different domain names by different web quick application servers 400. In addition, a web quick application and the web quick application server 400 also use different domain names.

S601B: A development device 200 sends a second message to the web quick application server 400.

The second message indicates the web quick application server 400 to query whether a first web quick application has a domain name.

S602B: The web quick application server 400 needs to query whether the first web quick application has a domain name.

When the first web quick application has the domain name, S607B is performed.

When the first web quick application does not have the domain name, S603B to S606B are performed.

S603B: The web quick application server 400 sends a second request to a domain name management server 500.

The second request may carry an IP address of the first web quick application.

The IP address of the first web quick application may also be referred to as a storage location of the first web quick application on the web quick application server 400.

Optionally, the IP address of the first web quick application may be an IP address of a resource file of a home page in the first web quick application on the web quick application server 400, or may be an IP address of a resource file of a non-home page in the first web quick application on the web quick application server 400, or may be IP addresses of resource files of all web pages in the first web quick application on the web quick application server 400. This is not limited in this application.

Optionally, the web quick application server 400 may alternatively separately send the second request and the IP address of the first web quick application to the domain name management server 500. The IP address of the first web quick application may not be sent to the domain name management server 500 together with the second request.

S604B: The domain name management server 500 generates the domain name of the first web quick application in response to the second request.

When the first web quick application does not have the domain name, the web quick application server 400 sends the second request to the domain name management server 500, where the second request indicates the domain name management server 500 to generate the domain name of the first web quick application.

In response to the second request, the domain name management server 500 may generate the domain name of the first web quick application.

In a possible implementation, in response to the first request, the domain name management server 500 may send a message to the development device 200 through the web quick application server 400, where the message is used to prompt a developer whether to generate the domain name of the first web quick application. With consent of the developer, the web quick application server 400 may send an indication message to the domain name management server 500, where the indication message indicates the domain name management server 500 to generate the domain name of the first web quick application. With disconsent of the developer, the domain name management server 500 does not need to generate the domain name of the first web quick application.

In another possible implementation, in response to the second request, the domain name management server 500 may first generate the domain name of the first web quick application. Then, the web quick application server 400 sends a message to the development device 200, where the message is used to prompt the developer whether to confirm to use the domain name of the first web quick application. With consent of the developer, the web quick application server 400 may send an indication message to the domain name management server 500, where the indication message indicates the domain name management server 500 to confirm to use the domain name of the first web quick application. With disconsent of the developer, the web quick application server 400 may alternatively send an indication message to the domain name management server 500, where the indication message indicates the domain name management server 500 to cancel the domain name of the first web quick application.

For example, different web quick applications have different domain names. For example, the domain name of the first web quick application may be "aaa.host". A domain name of a second web quick application may be "bbb.host".

S605B: The domain name management server 500 stores a correspondence between the domain name of the first web quick application and the IP address of the first web quick application.

After the domain name management server 500 generates the domain name of the first web quick application, the domain name management server 500 may store the correspondence between the domain name of the first web quick application and the IP address of the first web quick application. In this way, the domain name management server 500 can obtain the IP address of the first web quick application based on the domain name of the first web quick application, so that another device can access the first web quick application based on the IP address of the first web quick application.

S606B: The domain name management server 500 sends the domain name of the first web quick application to the web quick application server 400.

The domain name management server 500 sends the domain name of the first web quick application to the web quick application server 400, so that the web quick application server 400 can generate a URL of the first web quick application.

S607B: The web quick application server 400 generates the URL of the first web quick application based on the domain name of the first web quick application.

After the domain name management server 500 stores the correspondence between the domain name of the first web quick application and the IP address of the first web quick application, the first web quick application is allowed to use the domain name of the first web quick application. In this case, the web quick application server 400 generates the URL of the first web quick application based on the domain name of the first web quick application.

Optionally, the URL of the first web quick application may be "http://www.aaa.host". The URL of the first web quick application herein may be URLs of all web pages in the first web quick application. The first web quick application may include a plurality of web pages, and URLs of all the web pages are different from each other. A URL of another web page in the first web quick application may be obtained based on the URL of the home page in the first web quick application. For example, a URL of another web page in the first web quick application may be "http://www. aaa.host-drcn.agconnect.link/".

In some embodiments, the web quick application server 400 may also be referred to as a web quick application website. The web quick application website includes a plurality of different web quick application web pages. For example, the plurality of different web quick application web pages include a web page of the first web quick application.

For example, the electronic device 100 may receive a URL that is of the first web quick application and that is input by a user, and the electronic device 100 may access a first web page of the first web quick application based on the URL of the first web quick application.

For example, the electronic device 100 may alternatively receive an input operation (for example, a tap) performed by the user on a link of the first web quick application, and in response to the input operation performed by the user, the electronic device 100 may obtain the URL of the first web quick application. The electronic device 100 may access the web page of the first web quick application based on the URL of the first web quick application.

The following describes how the electronic device 100 accesses the first web quick application.

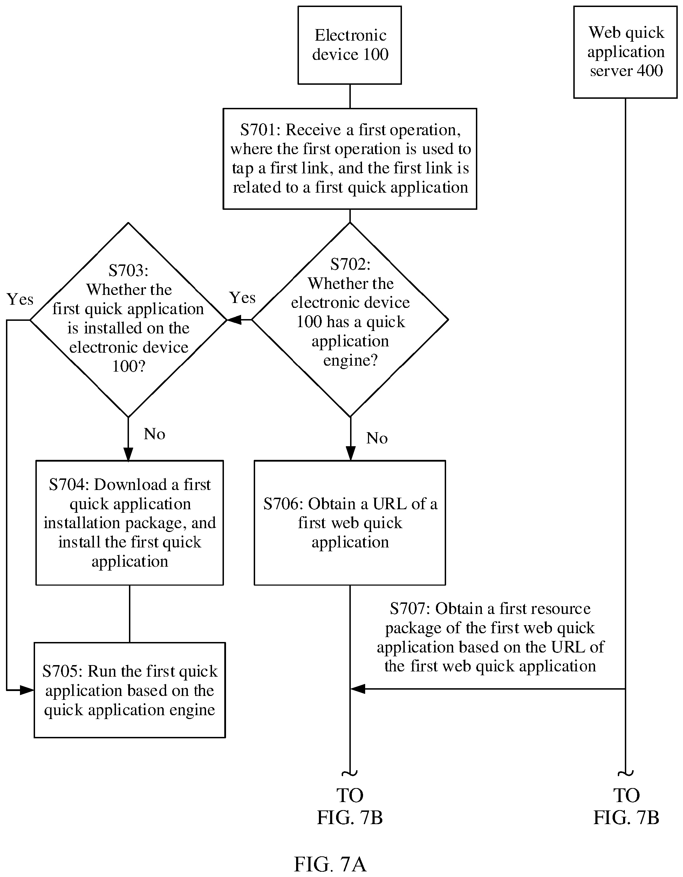

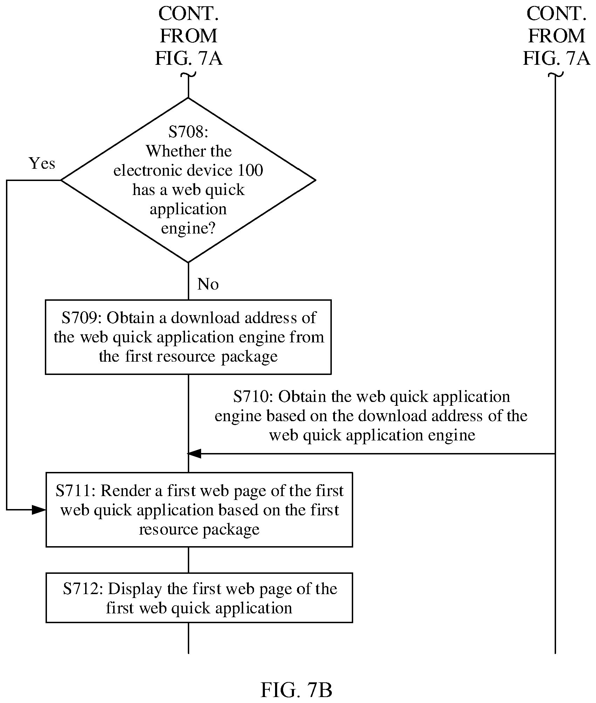

FIG. 7A and FIG. 7B are a schematic flowchart of a method for running a quick application by an electronic device 100 according to an embodiment of this application.

S701: The electronic device 100 receives a first operation, where the first operation is used to tap a first link, and the first link is related to a first quick application.

For example, the first link may be the quick application link 2101 shown in FIG. 2A.

The first operation may be the input operation (for example, a tap) performed on the quick application link 2101 shown in FIG. 2A.

In addition to tapping the quick application link 2101 on the instant messaging page 210 to start the first quick application, the electronic device 100 may further receive a user operation in another application to start the first quick application. This is not limited in this application.

When a web quick application engine is installed on the electronic device 100, the electronic device 100 may run the first quick application, and display a user interface in the first quick application. For details, refer to the descriptions in FIG. 2A and FIG. 2B.

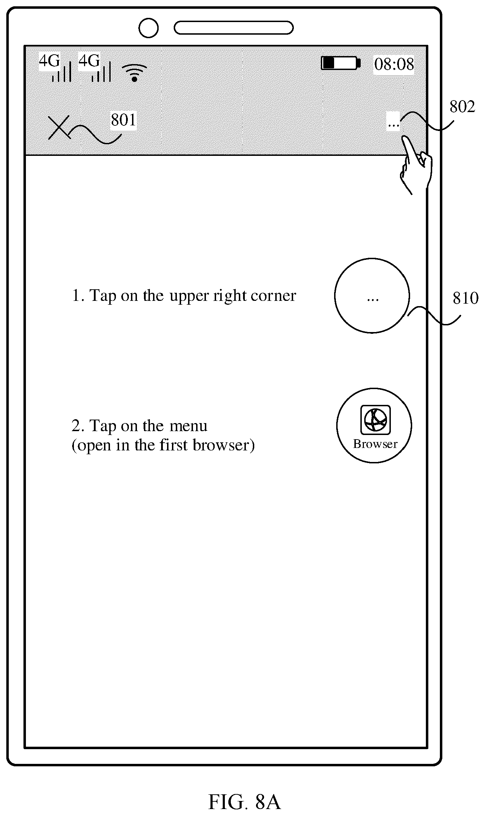

When the quick application engine is not installed on the electronic device 100, the electronic device 100 may run a web quick application corresponding to the first quick application, for example, a first web quick application, and display a web page in the first web quick application. For details, refer to the descriptions in FIG. 8A to FIG. 8C.

S702: The electronic device 100 needs to determine whether the electronic device 100 has a quick application engine.

The quick application engine may provide a basic capability of the quick application. The basic capability includes but is not limited to one or more of the following: an interface interaction capability, a network access capability, a file data storage capability, an audio/video playing capability, an image display capability, and a security capability. An electronic device on which the quick application engine is not installed cannot run the quick application.

If the electronic device 100 determines that the quick application engine is installed on the electronic device 100, the electronic device 100 performs S703 to S705.

If the electronic device 100 determines that the quick application engine is not installed on the electronic device 100, the electronic device 100 performs S706.

Optionally, the electronic device 100 may alternatively perform S706 to S712 directly without performing S702 to S705.

S703: The electronic device 100 needs to determine whether the first quick application is installed on the electronic device 100.

When the electronic device 100 determines that the first quick application is installed on the electronic device 100, the electronic device 100 performs S705.

When the electronic device 100 determines that the first quick application is not installed on the electronic device 100, the electronic device 100 performs S704.

S704: The electronic device 100 downloads a first quick application installation package, and installs the first quick application.

When the quick application engine is installed on the electronic device 100, but the first quick application is not installed on the electronic device 100, the electronic device 100 may download the first quick application installation package from a quick application server 300, and install the first quick application.

S705: The electronic device 100 runs the first quick application based on the quick application engine.

When the quick application engine is installed on the electronic device 100, and the first quick application is also installed on the electronic device 100, the electronic device 100 may run the first quick application based on the quick application engine.

For example, the first quick application may be "xxx Reader", and the electronic device 100 may display the user interface 220 shown in FIG. 2B.

S706: The electronic device 100 obtains a URL of the first web quick application.

Herein, the URL of the first web quick application may be a URL of a home page in the first web quick application, or may be a URL of a non-home page in the first web quick application. This is not limited in this application.

When the quick application engine is not installed on the electronic device 100, the electronic device 100 cannot run the first quick application. In this case, the electronic device 100 may access a first quick application of a web page version, namely, the first web quick application. In this way, even when the quick application engine is not installed, the electronic device 100 can still run a quick application, but runs a quick application of a web page version. The first quick application and the first web quick application may be used to implement a same or similar function.

Before the electronic device 100 runs the first web quick application, the electronic device 100 needs to obtain a first resource package of the first web quick application. The first resource package is used to implement a function of the first web quick application. According to the description in the embodiment in FIG. 5, the first resource package may be obtained based on the web quick application template and the installation package of the first quick application. Specifically, for how to generate the first resource package of the first web quick application, refer to the descriptions in S505 to S507. Details are not described herein again in this application.

The electronic device 100 may obtain the URL of the first web quick application. The URL of the first web quick application is used by the electronic device 100 to obtain the first resource package of the first web quick application from a web quick application server 400.

S707: The electronic device 100 obtains the first resource package of the first web quick application from the web quick application server 400 based on the URL of the first web quick application.

After obtaining the URL of the first web quick application, the electronic device 100 may obtain the first resource package of the first web quick application from the web quick application server 400. The first resource package may include a resource file for the electronic device 100 to draw and render a web page in the first web quick application.

According to the description in the embodiment in FIG. 5, the first resource package may be obtained based on the installation package of the first quick application and the web quick application template. The web quick application template includes but is not limited to a web quick application resource file, a hypertext markup language (hypertext markup language, HTML) file, and a configuration file. The HTML file is a static web page file, and is used by the electronic device 100 to draw and render a web page based on the first resource package. The configuration file may include but is not limited to a download address of a web quick application engine, description information of the first web quick application, and the like. The web quick application template and the configuration file may further include more other files. This is not limited in this application.

Optionally, when the electronic device 100 has previously downloaded the first resource package of the first web quick application, that is, the electronic device 100 stores the first resource package of the first web quick application, the electronic device 100 may not perform S706 and S707, and does not need to repeatedly obtain the first resource package of the first web quick application, to improve a speed at which the electronic device 100 runs the first web quick application.

S708: The electronic device 100 needs to determine whether the electronic device 100 has a web quick application engine.

Optionally, one web quick application engine may be universally used for different web quick applications. Optionally, different web quick application engines may alternatively be used for different web quick applications. This is not limited in this application.

The electronic device 100 needs to determine whether the electronic device 100 has the web quick application engine.

When the electronic device 100 has the web quick application engine, the electronic device 100 may not need to repeatedly download the web quick application engine, and the electronic device 100 performs S711.

When the electronic device 100 does not have the web quick application engine, the electronic device 100 needs to download the web quick application engine, and the electronic device 100 performs S709 and S710.

S709: The electronic device 100 obtains a download address of the web quick application engine from the first resource package.

When the electronic device 100 does not have the web quick application engine, the electronic device 100 needs to download the web quick application engine, and the first resource package includes the download address of the web quick application engine. The electronic device 100 may obtain the download address of the web quick application engine from the first resource package.

S710: The electronic device 100 obtains the web quick application engine based on the download address of the web quick application engine.

After obtaining the download address of the web quick application engine, the electronic device 100 may obtain the web quick application engine from the web quick application server 400.

Optionally, S708 to S710 are not limited to being performed after S707, and S708 to S710 may alternatively be performed in any step before S707. This is not limited in this application.

Optionally, the electronic device 100 may alternatively not perform S708 to S710. When the electronic device 100 has previously downloaded the web quick application engine, that is, the electronic device 100 stores the web quick application engine, the electronic device 100 may directly perform S711 and S712 after S707. There is no need to repeatedly obtain the web quick application engine, to improve a speed at which the electronic device 100 runs the first web quick application.

The web quick application engine may provide the basic capability of the web quick application. The basic capability includes but is not limited to one or more of the following: an interface interaction capability, a network access capability, a file data storage capability, an audio/video playing capability, an image display capability, and a security capability. In some embodiments, the web quick application engine may also be referred to as an application program interface (application program interface, API) for implementing the basic capability of the web quick application.

In some embodiments, a basic capability of the web quick application engine is also updated, for example, another basic capability is added. Correspondingly, after the basic capability of the web quick application engine is updated, a version number of the web quick application engine is also updated. The web quick application server 400 stores a web quick application engine of a latest version.

When the electronic device 100 stores the web quick application engine, the electronic device 100 further stores the version number of the web quick application engine. The electronic device 100 further needs to determine whether the web quick application engine stored in the electronic device 100 is of the latest version. If the web quick application engine is of the latest version, the electronic device 100 does not need to re-download the web quick application engine. If the web quick application engine is not of the latest version, the electronic device 100 needs to download the web quick application engine of the latest version from the web quick application server 400. In this way, some web quick applications depend on the web quick application engine of the latest version. The electronic device 100 may update the web quick application engine, to ensure normal running of the web quick application.

In a possible implementation, the web quick application server 400 stores the web quick application engine of the latest version and the version number of the web quick application engine. The configuration file in the first resource package of the first web quick application may include a version number of the web quick application engine in addition to the download address of the web quick application engine and the description information of the first web quick application. In this case, after obtaining the first resource package, the electronic device 100 may further obtain the version number of the web quick application engine of the latest version stored in the web quick application server 400. The electronic device 100 may compare the version number of the web quick application engine stored in the electronic device 100 with the version number of the web quick application engine in the configuration file. When the two version numbers are the same, it indicates that the web quick application engine stored in the electronic device 100 is of the latest version. In this case, the electronic device 100 does not need to re-download the web quick application engine. When the two version numbers are different, it indicates that the web quick application engine stored in the electronic device 100 is not of the latest version. In this case, the electronic device 100 needs to download the web quick application engine of the latest version. Specifically, the electronic device 100 may send a request to the web quick application server 400, where the request is used to download the web quick application engine of the latest version. After the web quick application server 400 receives the request sent by the electronic device 100, the web quick application server 400 may send the web quick application engine of the latest version to the electronic device 100, and the electronic device 100 may store the web quick application engine of the latest version. Optionally, the electronic device 100 may delete a web quick application engine of an earlier version.

In another possible implementation, the web quick application server 400 stores the web quick application engine of the latest version and the version number of the web quick application engine. The configuration file in the first resource package of the first web quick application does not include the version number of the web quick application engine. The electronic device 100 may send the version number of the web quick application engine stored in the electronic device 100 to the web quick application server 400 periodically/aperiodically/at a specific interval. After receiving the version number of the web quick application engine sent by the electronic device 100, the web quick application server 400 compares the version number of the web quick application engine with a version number of a locally stored web quick application engine of a latest version. When the two version numbers are the same, it indicates that the web quick application engine stored in the electronic device 100 is of the latest version. In this case, the electronic device 100 does not need to re-download the web quick application engine. When the two version numbers are different, it indicates that the web quick application engine stored in the electronic device 100 is not of the latest version. In this case, the electronic device 100 needs to download the web quick application engine of the latest version. Specifically, the web quick application server 400 may send a message to the electronic device 100. The message indicates the electronic device 100 to download the web quick application engine of the latest version. Optionally, after the electronic device 100 receives the message sent by the web quick application server 400, the electronic device 100 may prompt a user whether the web quick application engine needs to be updated. With consent of the user, the electronic device 100 may download the web quick application engine of the latest version from the web quick application server 400, and delete the web quick application engine of an earlier version. With disconsent of the user, the electronic device 100 still stores the web quick application engine of the earlier version. In this case, when the electronic device 100 runs the web quick application subsequently, if the web quick application depends on the web quick application engine of the latest version, the electronic device 100 may display prompt information, where the prompt information indicates the electronic device 100 to update the web quick application engine, otherwise, the electronic device 100 cannot run the web quick application. With consent of the user, the electronic device 100 may download the web quick application engine of the latest version from the web quick application server 400, and delete the web quick application engine of an earlier version. In this way, the electronic device may run the web quick application based on the web quick application engine of the latest version. With disconsent of the user, the electronic device 100 still stores the web quick application engine of the earlier version, but the electronic device 100 cannot run the web quick application.

In another possible implementation, the web quick application server 400 stores the web quick application engine of the latest version and the version number of the web quick application engine. After the web quick application engine in the web quick application server 400 is updated, the web quick application server 400 may send a version number of the web quick application engine of the latest version to the electronic device 100 periodically/aperiodically/at a specific interval. After receiving the version number that is of the web quick application engine of the latest version and that is sent by the web quick application server 400, the electronic device 100 compares whether the two version numbers are the same. When the two version numbers are the same, it indicates that the web quick application engine stored in the electronic device 100 is of the latest version. In this case, the electronic device 100 does not need to re-download the web quick application engine. When the two version numbers are different, it indicates that the web quick application engine stored in the electronic device 100 is not of the latest version. In this case, the electronic device 100 needs to download the web quick application engine of the latest version. Specifically, the electronic device 100 may send a request to the web quick application server 400, where the request is used to download the web quick application engine of the latest version. After the web quick application server 400 receives the request sent by the electronic device 100, the web quick application server 400 may send the web quick application engine of the latest version to the electronic device 100, and the electronic device 100 may store the web quick application engine of the latest version. Optionally, the electronic device 100 may delete a web quick application engine of an earlier version. Optionally, before the electronic device 100 sends the request to the web quick application server 400, the electronic device 100 may display prompt information, where the prompt information is used to prompt the user whether to update the web quick application engine. With consent of the user, the electronic device 100 sends the request to the web quick application server 400. With disconsent of the user, the electronic device 100 does not send the request to the web quick application server 400, and still stores the web quick application engine of the earlier version. In this case, when the electronic device 100 runs the web quick application subsequently, if the web quick application depends on the web quick application engine of the latest version, the electronic device 100 may display prompt information, where the prompt information indicates the electronic device 100 to update the web quick application engine, otherwise, the electronic device 100 cannot run the web quick application. With consent of the user, the electronic device 100 may download the web quick application engine of the latest version from the web quick application server 400, and delete the web quick application engine of an earlier version. In this way, the electronic device may run the web quick application based on the web quick application engine of the latest version. With disconsent of the user, the electronic device 100 still stores the web quick application engine of the earlier version, but the electronic device 100 cannot run the web quick application.

In another possible implementation, the web quick application server 400 stores the web quick application engine of the latest version and the version number of the web quick application engine. After the web quick application engine in the web quick application server 400 is updated, the web quick application server 400 may send the web quick application engine of the latest version and a version number of the web quick application engine of the latest version to the electronic device 100 periodically/aperiodically/at a specific interval. After receiving the web quick application engine of the latest version that is sent by the web quick application server 400 and the version number of the web quick application engine of the latest version, the electronic device 100 compares whether the two version numbers are the same. When the two version numbers are the same, it indicates that the web quick application engine stored in the electronic device 100 is of the latest version. In this case, the electronic device 100 does not need to re-download the web quick application engine. When the two version numbers are different, it indicates that the web quick application engine stored in the electronic device 100 is not of the latest version. In this case, the electronic device 100 needs to download the web quick application engine of the latest version, and the electronic device 100 may delete the web quick application engine of an earlier version, and store the web quick application engine of the latest version. Optionally, before the electronic device 100 updates the web quick application engine, the electronic device 100 may display prompt information, where the prompt information is used to prompt the user whether to update the web quick application engine. With consent of the user, the electronic device 100 deletes the web quick application engine of the earlier version, and stores the web quick application engine of the latest version. With disconsent of the user, the electronic device 100 deletes the web quick application engine of the latest version, and still stores the web quick application engine of the earlier version. In this case, when the electronic device 100 runs the web quick application subsequently, if the web quick application depends on the web quick application engine of the latest version, the electronic device 100 may display prompt information, where the prompt information indicates the electronic device 100 to update the web quick application engine, otherwise, the electronic device 100 cannot run the web quick application. With consent of the user, the electronic device 100 may download the web quick application engine of the latest version from the web quick application server 400, and delete the web quick application engine of an earlier version. In this way, the electronic device may run the web quick application based on the web quick application engine of the latest version. With disconsent of the user, the electronic device 100 still stores the web quick application engine of the earlier version, but the electronic device 100 cannot run the web quick application.

In addition to the foregoing listed several manners of updating the web quick application engine, the electronic device 100 may further update the web quick application engine in another manner. This is not limited in this application.

S711: The electronic device 100 renders a first web page of the first web quick application based on the first resource package.

S712: The electronic device 100 displays the first web page of the first web quick application.

Optionally, the electronic device 100 may render the first web page of the first web quick application based on a first browser. This is because the electronic device 100 needs a web component to render the web page. The first browser may provide the web component, and the electronic device 100 may render the first web page of the first web quick application based on the first browser. The electronic device 100 is not limited to rendering the first web page of the first web quick application based on the first browser. If another application (for example, an instant messaging application) may also provide a web component, the electronic device 100 may directly render the first web page of the first web quick application based on the web component provided by the another application, and does not need to jump to the first browser and render the first web page of the first web quick application based on the web component provided by the first browser. When the another application (for example, the instant messaging application) does not provide a web component, the electronic device 100 needs to jump to the first browser, and render the first web page of the first web quick application based on the web component provided by the first browser. In this way, it can be ensured that the electronic device 100 successfully renders the first web page of the first web quick application and displays the first web page.

After the electronic device 100 obtains the first web page of the first web quick application through rendering, the electronic device 100 may run the first web quick application based on the web quick application engine, and display the first web page of the first web quick application. To run the web quick application, the electronic device 100 needs to provide a basic capability, for example, an interface interaction capability, a network access capability, a file data storage capability, an audio/video playing capability, an image display capability, and a security capability. These basic capabilities may be implemented by the web quick application engine. In this case, the electronic device 100 may first download the web quick application engine, and then run the first web quick application based on the web quick application engine, to ensure normal running of the first web quick application.

In this embodiment of this application, an example in which the electronic device 100 renders the first web page of the first web quick application by using the first browser is used for description.

FIG. 8A to FIG. 8F are examples of diagrams of UIs of running a first web quick application by an electronic device 100.

For example, the first web quick application may be "xxx Reader".

Refer to the descriptions in FIG. 2A. The electronic device 100 may receive an input operation (for example, a tap) performed by a user on the quick application link 2101, and in response to the input operation performed by the user, when a quick application engine is not configured for the electronic device 100, the electronic device 100 may run a web quick application corresponding to the first web quick application, for example, the first web quick application.

For example, the electronic device 100 may display a user interface 810 shown in FIG. 8A. The user interface 810 is used to indicate the user to run the first web quick application by using a first browser.

Optionally, if an instant messaging application may provide a web component, the electronic device 100 may also run the first web quick application by using the web component provided by the instant messaging application.

As shown in FIG. 8A, the user interface 810 includes a control 801 and a control 802. The control 801 is used to stop displaying the user interface 810. The control 802 is used to start the first browser. The user interface 810 further includes text information, and the text information is used to prompt the user how to start the first browser.

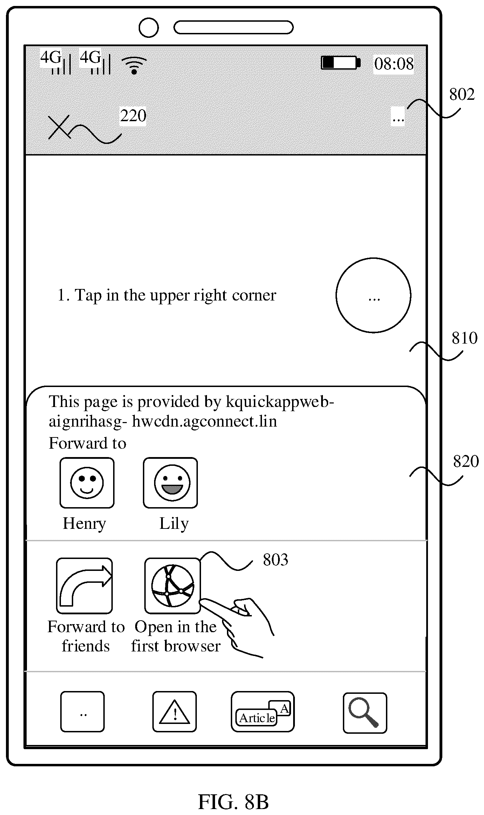

As shown in FIG. 8A, the electronic device 100 may receive an input operation (for example, a tap) performed by the user on the control 802 in the user interface 810, and in response to the input operation of the user, the electronic device 100 may display a pop-up window 820 shown in FIG. 8B. The pop-up window 820 includes icons of one or more contacts, a forwarding icon, and an icon 803 of the first browser.

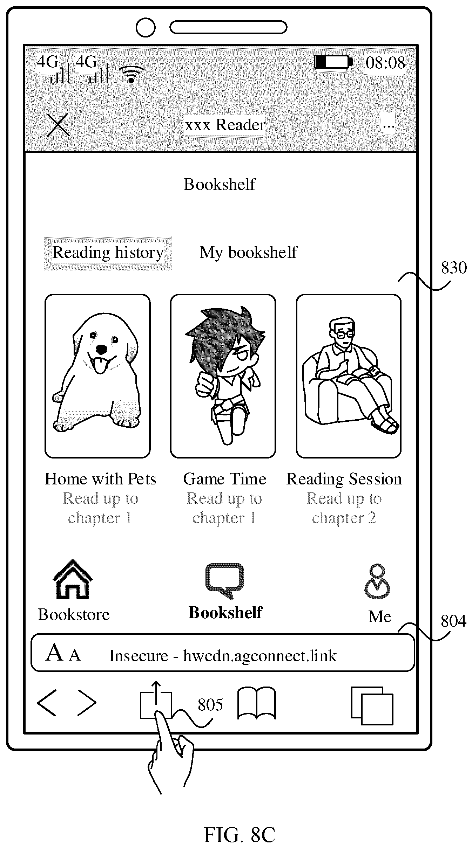

As shown in FIG. 8B, the electronic device 100 may receive an input operation (for example, a tap) performed by the user on the icon 803 of the first browser in the pop-up window 820. In response to the input operation performed by the user, the electronic device 100 may display a user interface 830 shown in FIG. 8C.

The user interface 830 further includes a website address bar 804, and a website address in the website address bar 804 may be a URL of the first web quick application.

Optionally, the website address bar 804 is not limited to being displayed at the bottom of the user interface 830. The website address bar 804 may alternatively be displayed at another location of the user interface 830, for example, a top location. This is not limited in this application either.

For example, the user interface 830 may be a first web page of the first web quick application.

In some embodiments, the first web page (the user interface 830) of the first web quick application may be similar to a user interface (the user interface 220) of a first quick application. In another embodiment, the first web page (the user interface 830) of the first web quick application may be different from the user interface (the user interface 220) of the first quick application. For example, interface layouts and/or display content are different. This is not limited in this application.

In some embodiments, to enable a user who uses the electronic device 100 to quickly find the first web quick application and run the first web quick application, the electronic device 100 may receive a user operation, and add the first web quick application to a home screen.

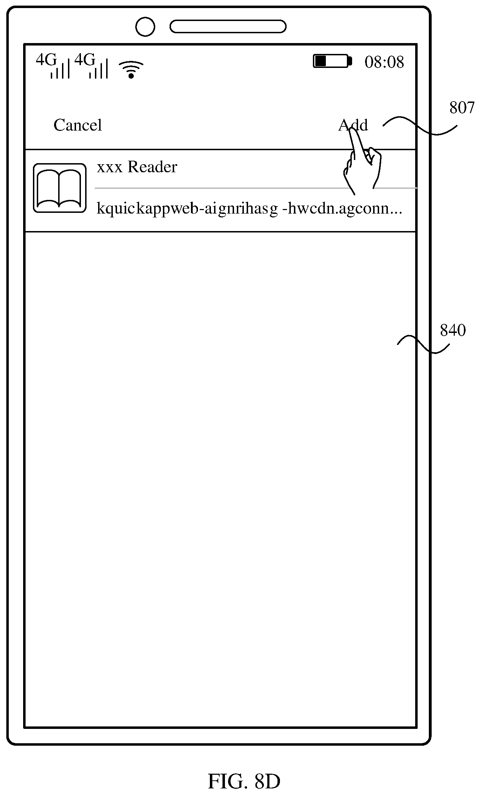

For example, as shown in FIG. 8C, the electronic device 100 may receive an input operation (for example, a tap) performed by the user on a control 805 in the user interface 830, and in response to the input operation of the user, the electronic device 100 may display a user interface 840 shown in FIG. 8D.

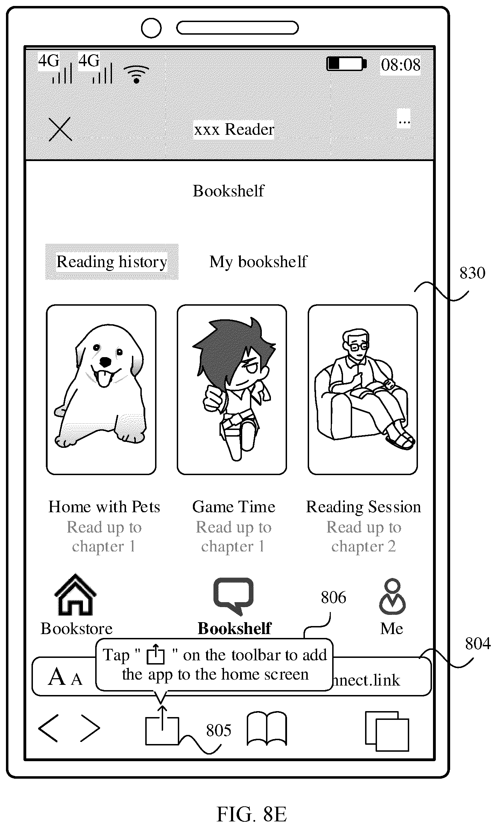

Optionally, as shown in FIG. 8E, before the electronic device 100 receives the input operation (for example, a tap) performed by the user on the control 805 in the user interface 830, the electronic device 100 may display prompt information 806 in the user interface 830. The prompt information 806 is used to prompt the user how to add the first web quick application to the home screen.

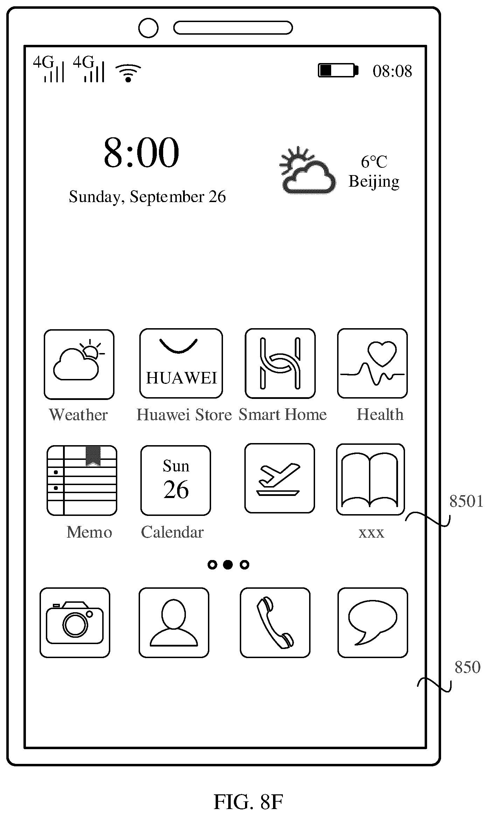

As shown in FIG. 8D, the user interface 840 includes an add control 807. The electronic device 100 may receive an input operation (for example, a tap) performed by the user on the add control 807 in the user interface 840, and in response to the input operation of the user, the electronic device 100 may display a user interface 850 shown in FIG. 8F. The user interface 850 includes an icon 8501 of the first web quick application. In this way, the electronic device 100 may quickly run the first web quick application by tapping the icon 8501 of the first web quick application.

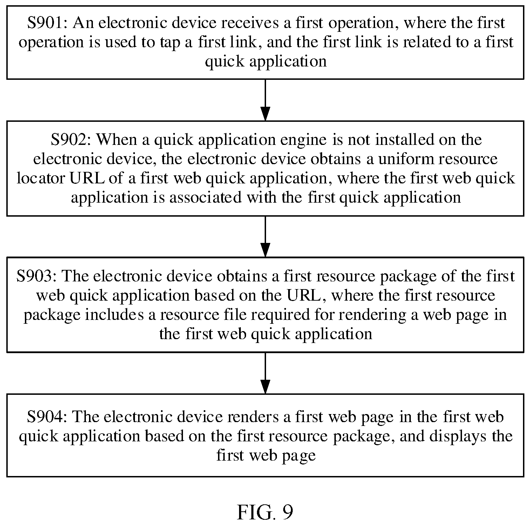

FIG. 9 is a schematic flowchart of a quick application running method according to an embodiment of this application.

S901: An electronic device receives a first operation, where the first operation is used to tap a first link, and the first link is related to a first quick application.

The first link may be the quick application link 2101 shown in FIG. 2A.

The first operation may be an input operation (for example, a tap) performed on the quick application link 2101 shown in FIG. 2A.

A display form of the first link is not limited to the display form of the quick application link 2101 shown in FIG. 2A, and may alternatively be another display form. This is not limited in this application.

S902: When a quick application engine is not installed on the electronic device, the electronic device obtains a uniform resource locator URL of a first web quick application, where the first web quick application is associated with the first quick application.

In a possible implementation, when the quick application engine is installed on the electronic device, the electronic device runs the first quick application based on the quick application engine, and displays a first user interface of the first quick application.

In a possible implementation, the URL of the first web quick application is generated by a web quick application server based on a domain name of the first web quick application. The domain name of the first web quick application is generated by a domain name management server, and the domain name management server stores a correspondence between a storage location of a first resource package in the web quick application server and the domain name of the first web quick application.

Specifically, before the URL of the web quick application is generated, whether the first web quick application has a domain name needs to be first determined. When the first web quick application does not have a domain name, the domain name management server needs to be requested to generate the domain name of the first web quick application. The request carries a storage location, namely, an IP address, of the first resource package of the first web quick application in the web quick application server. After receiving the request, the domain name management server may generate the domain name of the first web quick application, and establish a correspondence between the domain name of the first web quick application and the IP address of the first resource package of the first web quick application. Then, the domain name management server sends the domain name of the first web quick application to the web quick application server. After receiving the domain name of the first web quick application, the web quick application server may generate the URL of the first web quick application based on the domain name of the first web quick application.

In a possible implementation, different web quick applications have different domain names. In this way, information leakage between different web quick applications can be avoided.

S903: The electronic device obtains the first resource package of the first web quick application based on the URL, where the first resource package includes a resource file required for rendering a web page in the first web quick application.

In a possible implementation, the first resource package is obtained based on an installation package of the first quick application and a web quick application template. The web quick application template includes but is not limited to one or more of the following: a web quick application resource file, a hypertext markup language (hypertext markup language, HTML) file, and a configuration file. The configuration file includes but is not limited to one or more of the following: a download address of a web quick application engine and description information of the first web quick application.

S904: The electronic device renders a first web page in the first web quick application based on the first resource package, and displays the first web page.

In a possible implementation, that the electronic device renders a first web page in the first web quick application based on the first resource package specifically includes: The electronic device renders the first web page in the first web quick application based on the first resource package and a web component provided by a first browser.

Optionally, the first web page is not limited to being rendered in the first browser. When another application can provide a web component, the electronic device may directly render the first web page based on the web component provided by the another application.

In a possible implementation, that the electronic device displays the first web page specifically includes: The electronic device obtains a first web quick application engine, where the first web quick application engine is used to provide a basic capability of running a web quick application by the electronic device; and the electronic device runs the first quick application based on the first web quick application engine and displays the first web page. In this way, when the quick application engine is not installed on the electronic device, the electronic device may run the web quick application based on the web quick application engine, to implement a function the same as or similar to that of the quick application.

In a possible implementation, the basic capability of running the web quick application by the electronic device includes one or more of the following: an interface interaction capability, a network access capability, a file data storage capability, an audio/video playing capability, an image display capability, and a security capability.

In a possible implementation, that the electronic device obtains a first web quick application engine specifically includes: When the first web quick application engine is installed on the electronic device, the electronic device directly obtains the first web quick application engine locally. In this way, when the web quick application engine is installed on the electronic device, the electronic device may use the installed web quick application engine.

In a possible implementation, the first resource package includes a first version number of a second web quick application engine and a download address of the second web quick application engine. That the electronic device directly obtains the first web quick application engine locally specifically includes: The electronic device locally obtains a second version number of the first web quick application engine. When the second version number is the same as the first version number, the electronic device directly obtains the first web quick application engine locally.

The first version number of the second web quick application engine is a version number of the first resource package stored in a web quick application server, and the version number is a version number of a latest version.

The download address of the second web quick application engine may be a storage location of a web quick application engine of the latest version in the web quick application server. Optionally, the web quick application engine may not be stored in the web quick application server, but is stored in another server. In this case, the download address of the second web quick application engine may be a storage location of the web quick application engine of the latest version in the another server.

In this way, when running the web quick application, the electronic device may depend on a web quick application engine of a later version. Therefore, the electronic device needs to determine whether the locally installed web quick application engine is the web quick application engine of the latest version. Optionally, whether the locally installed web quick application engine is the web quick application engine of the latest version may be determined based on the version number. When the locally stored web quick application engine is the web quick application engine of the latest version, the electronic device may directly run the web quick application based on the local web quick application engine.

In a possible implementation, when the second version number is different from the first version number, the electronic device obtains the second web quick application engine based on the download address of the second web quick application engine. That the electronic device runs the first quick application based on the first web quick application engine and displays the first web page specifically includes: The electronic device runs the first quick application based on the second web quick application engine and displays the first web page. In this way, when the locally stored web quick application engine is the web quick application engine of the latest version, the electronic device needs to download the web quick application engine of the latest version, and run the web quick application based on the web quick application engine of the latest version.

Optionally, after the electronic device obtains the web quick application engine of the latest version, the electronic device may delete a web quick application engine of an earlier version, to release storage space of the electronic device.

Optionally, compared with the web quick application engine of the earlier version, in a web quick application engine of a later version, a basic capability may be newly added. In this case, the electronic device may not obtain a complete web quick application engine, but obtain only a resource package of a web quick application engine of the newly added basic capability.

In a possible implementation, the method further includes: When the first web quick application engine is not installed on the electronic device, the electronic device obtains the download address of the second web quick application engine from the first resource package. The electronic device obtains the second web quick application engine based on the download address of the second web quick application engine. That the electronic device runs the first quick application based on the first web quick application engine and displays the first web page specifically includes: The electronic device runs the first quick application based on the second web quick application engine and displays the first web page. In this way, when the web quick application engine is not installed on the electronic device, the electronic device may directly download the web quick application engine of the latest version.

That the first web quick application is associated with the first quick application may mean that the first web quick application and the first quick application may provide a same or similar function.

Optionally, for different types of electronic devices, a same web quick application is generally developed by a same vendor, and a same web quick application may be used to implement a same or similar function on devices of different device types. Resource packages of a same web quick application downloaded by devices of different device types may be the same or different. For different types of devices, sizes of resource packages of a same web quick application may also be the same or different.

According to the method, when the quick application engine is not installed on the electronic device, the electronic device can run a quick application of a web page version.

The implementations of this application may be randomly combined to achieve different technical effects.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A quick application running method, wherein the method comprises:
receiving, by an electronic device, a first operation, wherein the first operation is used to tap a first link, and the first link is related to a first quick application;
when a quick application engine is not installed on the electronic device, obtaining, by the electronic device, a uniform resource locator URL of a first web quick application, wherein the first web quick application is associated with the first quick application;
obtaining, by the electronic device, a first resource package of the first web quick application based on the URL, wherein the first resource package comprises a resource file required for rendering a web page in the first web quick application;
rendering, by the electronic device, a first web page in the first web quick application based on the first resource package; and
displaying, by the electronic device, the first web page.

2. The method according to claim 1, wherein the displaying, by the electronic device, the first web page specifically comprises:
obtaining, by the electronic device, a first web quick application engine, wherein the first web quick application engine is used to provide a basic capability of running a web quick application by the electronic device; and
running, by the electronic device, the first quick application based on the first web quick application engine, and displaying the first web page.

3. The method according to claim 2, wherein the obtaining, by the electronic device, a first web quick application engine specifically comprises:
when the first web quick application engine is installed on the electronic device, directly obtaining, by the electronic device, the first web quick application engine locally.

4. The method according to claim 2 or 3, wherein the first resource package comprises a first version number of a second web quick application engine and a download address of the second web quick application engine; and
the directly obtaining, by the electronic device, the first web quick application engine locally specifically comprises:
locally obtaining, by the electronic device, a second version number of the first web quick application engine; and
when the second version number is the same as the first version number, directly obtaining, by the electronic device, the first web quick application engine locally.

5. The method according to claim 4, wherein the method further comprises:
when the second version number is different from the first version number, obtaining, by the electronic device, the second web quick application engine based on the download address of the second web quick application engine; and
the running, by the electronic device, the first quick application based on the first web quick application engine, and displaying the first web page specifically comprises:
running, by the electronic device, the first quick application based on the second web quick application engine, and displaying the first web page.

6. The method according to claim 4, wherein the method further comprises:
when the first web quick application engine is not installed on the electronic device, obtaining, by the electronic device, the download address of the second web quick application engine from the first resource package; and
obtaining, by the electronic device, the second web quick application engine based on the download address of the second web quick application engine; and
the running, by the electronic device, the first quick application based on the first web quick application engine, and displaying the first web page specifically comprises:
running, by the electronic device, the first quick application based on the second web quick application engine, and displaying the first web page.

7. The method according to any one of claims 1 to 6, wherein the URL of the first web quick application is generated by a web quick application server based on a domain name of the first web quick application; and
the domain name of the first web quick application is generated by a domain name management server, and the domain name management server stores a correspondence between a storage location of the first resource package in the web quick application server and the domain name of the first web quick application.

8. The method according to claim 7, wherein different web quick applications have different domain names.

9. The method according to any one of claims 1 to 8, wherein the rendering, by the electronic device, a first web page in the first web quick application based on the first resource package specifically comprises:
rendering, by the electronic device, the first web page in the first web quick application based on a web component provided by a first browser and the first resource package.

10. The method according to any one of claims 1 to 9, wherein the first resource package is obtained based on an installation package of the first quick application and a web quick application template, and the web quick application template comprises but is not limited to one or more of the following: a web quick application resource file, a hypertext markup language (hypertext markup language, HTML) file, and a configuration file; and
the configuration file comprises but is not limited to one or more of the following: the download address of the web quick application engine and description information of the first web quick application.

11. The method according to any one of claims 1 to 10, wherein the basic capability of running the web quick application by the electronic device comprises one or more of the following: an interface interaction capability, a network access capability, a file data storage capability, an audio/video playing capability, an image display capability, and a security capability.

12. The method according to any one of claims 1 to 11, wherein when the quick application engine is installed on the electronic device, the electronic device runs the first quick application based on the quick application engine, and displays a first user interface of the first quick application.

13. An electronic device, wherein the electronic device comprises a processor and a memory, the memory is coupled to the processor, the memory is configured to store computer program code, the computer program code comprises computer instructions, and the processor invokes the computer instructions to enable the electronic device to perform the method according to any one of claims 1 to 12.

14. A computer-readable storage medium, configured to store computer instructions, wherein when the computer instructions are run on an electronic device, the electronic device is enabled to perform the method according to any one of claims 1 to 12.

15. A computer program product, wherein when the computer program product runs on an electronic device, the electronic device is enabled to perform the method according to any one of claims 1 to 12.
